# EUROPEAN PATENT APPLICATION

(11) **EP 4 461 590 A1**
(43) Date of publication of application: **13.11.2024**
(21) Application number: 23204868.6
(22) Date of filing: 20.10.2023
(51) Int. Cl.: B60L 53/18, B60L 53/54, B60L 58/33, H01M 8/04029, B60L 53/10, B60L 53/57, H01B 7/42, H01R 9/11, H01R 13/00, H02G 3/03, H02G 3/04, H02G 15/00

(54) **LIQUID COOLING OF CHARGING CABLE IN FUEL-CELL-POWERED EV FAST CHARGER USING STACK COOLANT AND/OR PROCESS WATER**

(30) Priority: 08.05.2023 EP 23172067
(71) Applicant: H2 Energy Holding AG, 8004 Zürich (CH)
(72) Inventor: WALTER, Thomas, 8044 Zürich (CH); BELFANTI, Marco, 8050 Zürich (CH); SAUTER, David, 8005 Zürich (CH)
(74) Representative: Fischer, Michael

(57) **Abstract**

It is the objective of the present invention to provide a fuel cell powered EV fast charger that allows to charge at high current without the risk of overheating the charging infrastructure, such as cables (4), contact (5) and the like.

This objective is achieved according to the present invention by a fuel cell powered EV fast charger, comprising:
a) a stack of fuel cells, each fuel cell comprising an anode-side electrical power collector and a cathode-side electrical power collector;
b) a power converting unit that is on its input-side connected to the anode- and cathode-side electrical power collectors and that provide at its output-side a number of power cables (4) for the transfer of fast charging voltages and currents;
c) a cooling system that is connected for heat dissipation with the stack of fuel cells, wherein a cooling line of said cooling system is used to cool the power cables (4) and/or the contacts (5) and/or the power-converting unit and/or
d) a further cooling system that collects process water generated by the electrochemical reaction in the fuel cells wherein the power cables (4) and/or the contacts (5) and/or the power-converting unit are cooled using this process water.

## Description

The present invention relates to the liquid cooling system of charging cables for Fuel-Cell-powered EV fast-charging stations. In the context of the present invention, EV's encompass battery-electric or plug-in hybrid units such as cars, trucks, rail cars, ships, construction machinery and material handling equipment.

To decrease battery charging time, EV batteries are constantly being improved to allow for higher charging power. In most cases, the higher charging power is achieved thanks to higher charging currents, the battery voltage usually being dictated by automotive standards between 400V and 800V.

The increased charging current leads not only to faster recharging, but also to higher heat generation within the power cables and the connector contacts that need to be dissipated to avoid overheating. For this reason, liquid cooled charging cables, where liquid is used to manage the connector's contacts and/or the power cables temperature, have been developed and allow for high charging currents (>400A). For most effective cooling, specific non-conductive cooling fluids are used which are having the disadvantage of low heat capacity and strong temperature-related viscosity changes.

Alternatively, standard water-glycol mixtures could be used also but need an electrical insulation between the fluid and the electrical conductors, which are significantly reducing the heat transfer and thus the cooling effectiveness.

In Fuel-Cell-powered fast chargers, hydrogen is converted into electricity via an electrochemical reaction in the Fuel Cell. Electricity is therefore produced within the charger, unlike in standard fast chargers where electricity is taken from the grid.

Therefore, it is the objective of the present invention to provide a fuel cell powered EV fast charger that allows to charge at high current without the risk of overheating the charging infrastructure, such as cables, contacts, and the like.

This objective is achieved according to the present invention by a fuel cell powered EV fast charger, comprising:
a) a stack of fuel cells, each fuel cell comprising an anode-side electrical power collector and a cathode-side electrical power collector;
b) a power converting unit that is on its input-side connected to the anode- and cathode-side electrical power collectors and that provide at its output-side a number of power cables for the transfer of fast charging voltages and currents;
c) a cooling system that is connected for heat exchange with the stack of fuel cells, wherein a cooling line of said cooling system is used to cool the power cables and/or the power-converting unit and/or
d) a further cooling system that collects process water generated by the electrochemical reaction in the fuel cells wherein the power cables and/or the power-converting unit are cooled using this process water.

Since the electrochemical reaction of the fuel cells takes place in the stack of fuel cells thus generating electricity but also heat, the stack of fuel cells is therefore associated cooling-wise with the cooling circuitry. The need for this heat transfer in response to the heat generation due to the electrochemical reaction makes it necessary to align the stack of fuel cells with the cooling system in order to remove heat from the stack assembly. A fuel cell specific coolant (special water-glycol mixture) with low electrical conductivity and corrosion protection can be preferably used to avoid degradation and most importantly short circuits within the stack.

Since another product of the electrochemical reaction is deionized water, in liquid and vapor form, which is expelled from the fuel cell via the cathode exhaust, another cooling media is presently available if treated properly. In the stream of the cathode exhaust, at least part of this water vapor is condensed and collected together with the liquid exhaust water, resulting in a flow of high-purity and low conductive process water.

The present invention therefore is based on beneficially using componentry and fluids that are already present or are produced within Fuel-Cell-powered fast chargers for the liquid cooling of the charging cables and/or other components of the charging infrastructure. A cable cooling system can be integrated in the existing cooling loop for the stack of fuel cells, using the same fuel-cell-specific coolant flowing through the stack, and/or being integrated in the process water exhaust line, using the process water directly as coolant.

With the present invention a low conductive fluid is used for cooling, maintaining high heat capacity and low temperature-related viscosity changes. Low conductivity cooling preferably allows for direct cooling of the electrical conductors without the need for electrical insulation between conductor and cooling liquid.

Further preferred embodiments of the present invention are listed in the attached dependent claims.

Preferred embodiments of the present invention are hereinafter described in more detail with reference to the attached drawings which depict in:
- Figure 1: schematically a fuel-cell-powered fast charger using a cooling system for a stack of fuel cells to cool charging infrastructure; and
- Figure 2: schematically a fuel-cell-powered fast charger using process water generated by the electrochemical reaction taking place in fuel cells for cooling charging infrastructure.

According to the present invention, there exist various possible systems for cooling charging infrastructure of a fuel-cell-powered fast charger, one for example using a fuel-cell-specific stack cooling system in connection to the stack cooling loop, and the another for example using the process water exhausted from the fuel cells in connection to the process water exhaust line or a possible option could be also a combination of the two solutions. To achieve effective cooling, only one of the described systems is necessarily required.

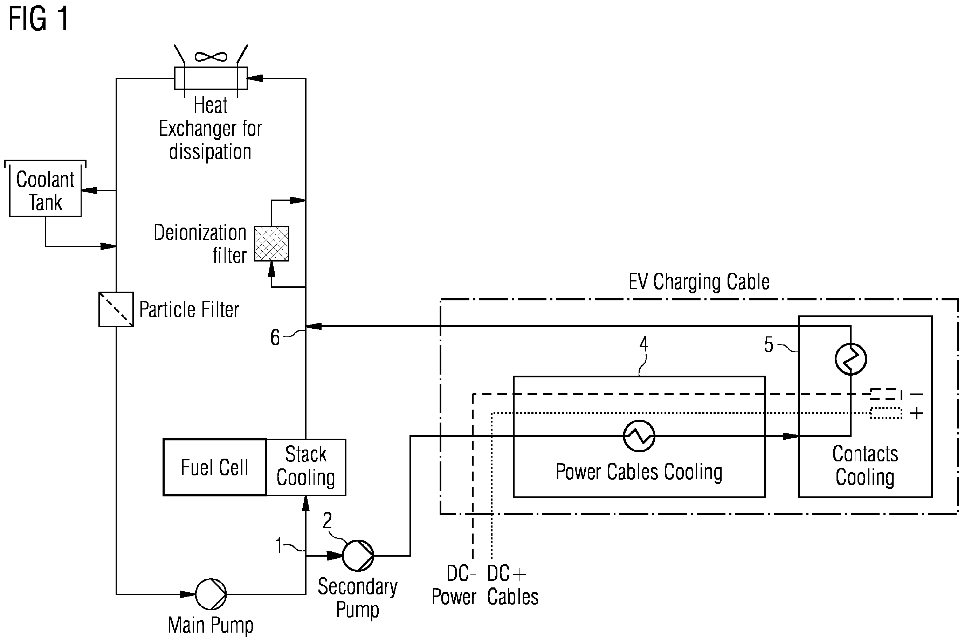

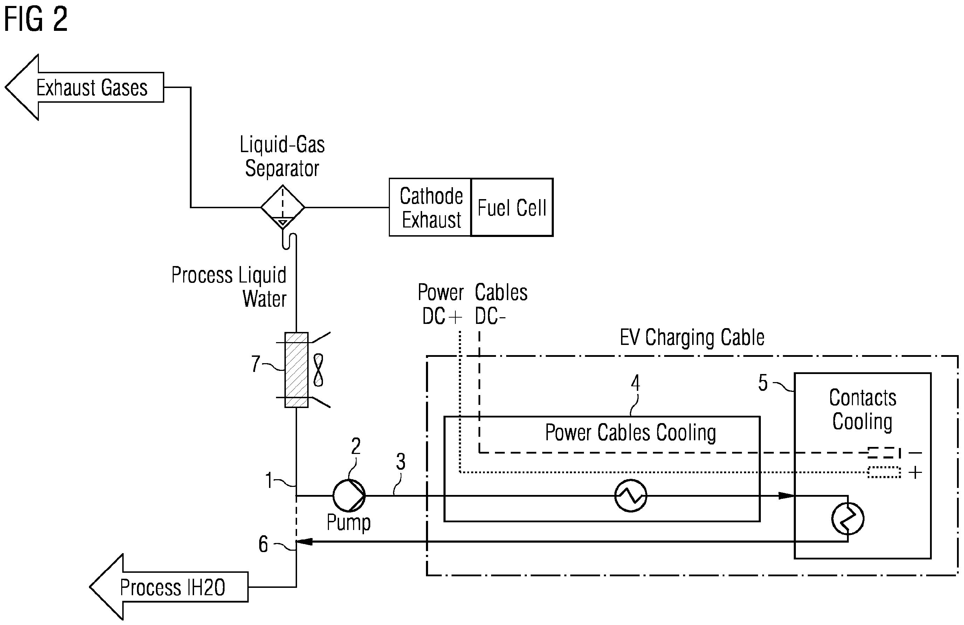

The present invention can be accommodated by the systems which comprise (see list of definitions and Figures 1 and 2):
1) A Stack cooling circuitry with a main stack coolant loop circulating a low conductivity coolant fluid, comprising in said main stack cooling loop a main pump, the stack cooling, a deionization filter (can be by-passed), a heat exchanger for dissipation, an optional coolant particle filter and a coolant tank . Additionally, a cooling loop for the charging cable 3 is branched off the main stack coolant loop at one or more take-offs 1. This additional cooling loop comprises, when necessary, one or more secondary pumps 2 to support in addition to the main pump, the circulation of the stack coolant through the charging cable 3, thereby cooling the power cables 4 and/or the connector's contacts 5 and feeding back the stack coolant from the cooling loop for the charging cable 3 into the main stack coolant loop at a return junction 6.
2) A gas-liquid separator connected to the cathode exhaust of the fuel cell stack and including a pump, thereby collecting the process liquid water and guiding it toward one or more take-offs 1. At the take-off 1 at least a portion of the process liquid water is fed into a cooling loop for the charging cable 3 thereby circulating this part of the process liquid water, optionally with the help of one or more additional pumps 2, through the charging cable 3, thereby cooling the power cables 4 and/or the connector's contacts 5 and feeding back this portion of the process liquid water at a return junction 6 into the exhaust line for the process liquid water. If temperature and heat conditions are requiring additional cooling means, a pre-cooling unit 7 for the process liquid water may be integrated, either into the exhaust line (as shown in Figure 2) and/or in the cooling loop for the charging cable 3 (only the branched-off portion of the process liquid water needs to be pre-cooled).

The advantage of using the stack coolant and/ or the process liquid water that are already used or produced within the fuel cell stack is the avoiding of a separate cooling loop for the charging cable(s) from an ulterior installation. The usual componentry (or balance of plant) that is normally used for Fuel-Cell-powered fast chargers can be easily adapted to accommodate the cooling of the charging cables 3, including at least the power cable 4 and the connector's contacts 5 and optionally further charging infrastructure components. Moreover, the stack coolant and/or the process liquid water can directly meet the purity and low conductivity requirements for use with the charging cables 3, making the need for further cleaning at least reduced or in total obsolete.

### List of reference signs

- 1: Coolant take off from main stack coolant loop for the fuel cell stack;
- 2: Circulation pump;
- 3: Charging cable with coolant circulation;
- 4: Cooling of the power cables;
- 5: Cooling of the connector contacts;
- 6: Return junction to main stack coolant loop;
- 7: Pre-cooling unit for process water;

## Claims

1. A fuel cell powered EV fast charger, comprising:
a) a stack of fuel cells, each fuel cell comprising an anode-side electrical power collector and a cathode-side electrical power collector;
b) a power converting unit that is on its input-side connected to the anode- and cathode-side electrical power collectors and that provide at its output-side a number of power cables for the transfer of fast charging voltages and currents;
c) a cooling system that is connected for heat dissipation with the stack of fuel cells, wherein a cooling line of said cooling system is used to cool the power cables and/or the power-converting unit and/or
d) a further cooling system that collects process water generated by the electrochemical reaction in the fuel cells wherein the power cables and/or the power-converting unit are cooled using this process water.

2. The EV fast charger according to claim 1, wherein an additional cooling unit is provided, receiving preferably its power supplies from the Fuel-Cell powered fast charger, in order to lower the temperature of the circulating cooling fluid.

3. The EV fast charger according to claim 1 or 2, wherein the mass flow of the coolant is adjustable according to the temperature of the coolant (with or without additional cooling unit) or according to a target temperature that shall be achieved at a predetermined measuring point.
